# EUROPEAN PATENT SPECIFICATION

(11) **EP 0 600 257 B1**
(45) Date of publication and mention of the grant of the patent: **04.02.2004**
(21) Application number: 93117998.0
(22) Date of filing: 05.11.1993
(51) Int. Cl.: G11B 5/53, G11B 15/61

(54) **Rotary head device**
Vorrichtung mit rotierendem Kopf
Dispositif à tête rotative

(30) Priority: 30.11.1992 JP 31987992
(43) Date of publication of application: 08.06.1994
(73) Proprietor: MITSUBISHI DENKI KABUSHIKI KAISHA, Tokyo 100 (JP)
(72) Inventor: Kato, Naoki, c/o Mitsubishi Denki K.K., Nagaokakyo-Shi, Kyoto 617 (JP); Miyago, Toshiharu, c/o Mitsubishi Denki K.K., Nagaokakyo-Shi, Kyoto 617 (JP); Nishida, Yoshikazu, c/o Mitsubishi Denki K.K., Nagaokakyo-Shi, Kyoto 617 (JP)
(74) Representative: Pfenning, Meinig & Partner

(56) References cited:
- DE-A- 3 545 804
- PATENT ABSTRACTS OF JAPAN vol. 15, no. 322 (P-1239) 16 August 1991 & JP-A-03 116 575 (MATSUSHITA ELECTRIC IND CO LTD) 17 May 1991
- PATENT ABSTRACTS OF JAPAN vol. 15, no. 226 (P-1213) 10 June 1991 & JP-A-03 066 056 (MATSUSHITA ELECTRIC IND CO LTD) 20 March 1991
- PATENT ABSTRACTS OF JAPAN vol. 16, no. 357 (P-1395) 31 July 1992 & JP-A-04 109 418 (HITACHI LTD) 10 April 1992
- PATENT ABSTRACTS OF JAPAN vol. 14, no. 358 (P-1087) 2 August 1990 & JP-A-02 130 746 (MATSUSHITA ELECTRIC IND CO LTD) 18 May 1990
- PATENT ABSTRACTS OF JAPAN vol. 16, no. 577 (P-1460) 16 December 1992 & JP-A-04 222 955 (MATSUSHITA ELECTRIC IND CO LTD) 12 August 1992

## Description

### Field of the Invention

This invention relates to a rotary head device which reduces a wrapping load of a magnetic tape that is applied to a rotary drum of a magnetic recording/reproducing apparatus of the helical scan type.

### Description of Related Art

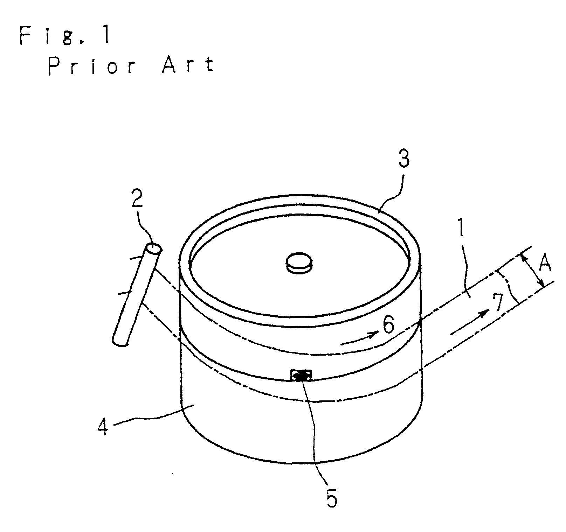

Fig. 1 is a schematic view of a prior art rotary head device. In Fig. 1, 1 designates a magnetic tape having a width of A, 2 designates a guide post, 3 designates a rotary drum, 4 designates a stationary drum, and 5 designates a magnetic head. The magnetic tape 1 is guided by the guide post 2, and wound on the outer faces of the rotary drum 3 and stationary drum 4 so that it contacts with the magnetic head 5. The rotary drum 3 rotates in the direction of an arrow 6 shown in the figure, thereby forwarding the magnetic tape 1 in the direction of an arrow 7 shown in the figure.

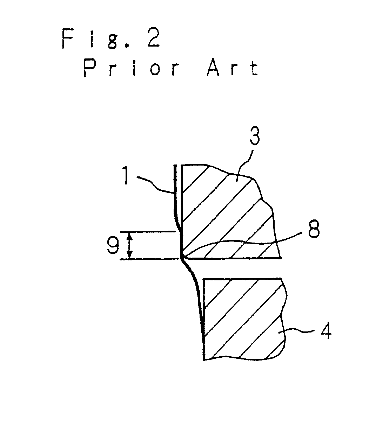

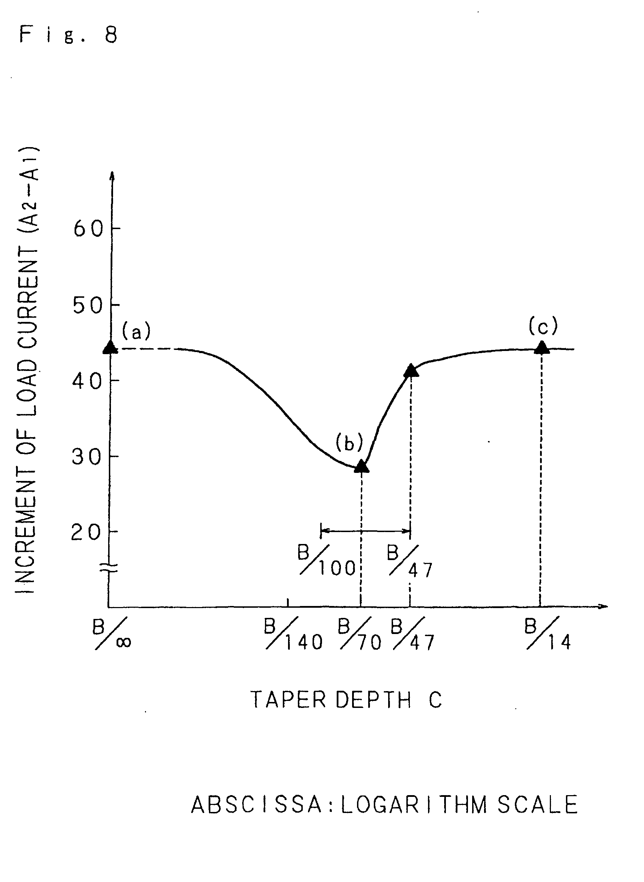

Fig. 2 is an enlarged view of the side portion of the prior art rotary head device under this state. In Fig. 2, 8 designates a rounded corner portion at the end face of the rotary drum 3 which opposes the stationary drum 4 (hereinafter, such an end face is referred to as "end face of the stationary drum 4 side"), and 9 designates a region where the magnetic tape 1 contacts with the rotary drum 3.

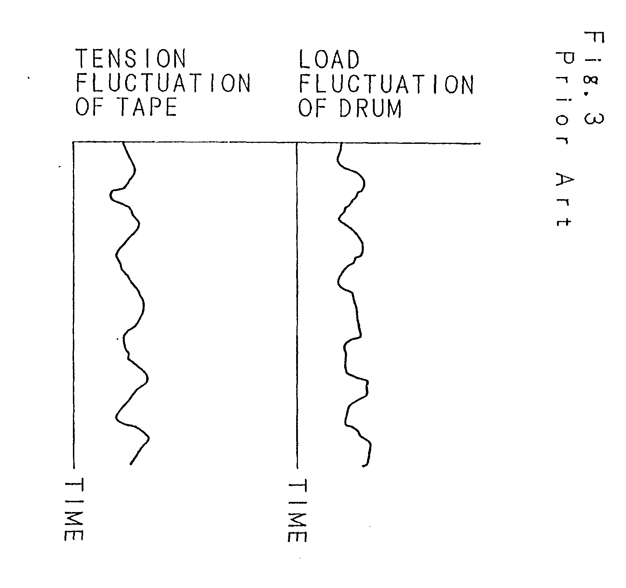

Fig. 3 illustrates a manner of fluctuation of load which is applied to the rotary drum 3 in the prior art rotary head device wherein the magnetic tape 1 runs while the tension fluctuates. As seen from Fig. 3, the load applied to the rotary drum 3 fluctuates in accordance with the frequency of the tension fluctuation.

Conventionally, a helical scan type rotary head device is used in a magnetic recording/reproducing apparatus such as a VTR. In such a prior art rotary head device, as indicated by 8 in Fig. 2, the corner of the end face of the stationary drum 4 side of the rotary drum 3 is rounded, for example, in order to remove burrs produced in a machining process or to prevent damage owing to the edge.

Between the rotary drum 3 and the magnetic tape 1, generally, a thin air film is formed so that the magnetic tape 1 runs over the surface of the rotary drum 3 while being separated therefrom. In the thus configured prior art rotary head device, as shown in Fig. 2, the air film is broken in the vicinity of the portion 8 of the end face of the stationary drum 4 side of the rotary drum 3. In a region 9 shown in Fig. 2, therefore, the magnetic tape 1 strongly contacts with the outer face of the rotary drum 3, resulting in that the magnetic tape 1 presses the rotary drum 3 of Fig. 1. This produces a running load acting when the rotary drum 3 and the magnetic tape 1 run in the directions of the arrows 6 and 7 shown in Fig. 1. Furthermore, there is a problem in that, when the magnetic tape 1 runs while the tension fluctuates, the load applied to the rotary drum 3 fluctuates in accordance with the frequency of the tension fluctuation, thereby causing the rotary drum 3 to irregularly rotate to impair the jitter performance of the VTR.

As a countermeasure to the above, a technique is employed in which the entire face of the rotary drum 3 is coated with a thin film of a material having a low-friction coefficient, such as an amorphous material, so that the running load generated between the magnetic tape 1 and the rotary drum 3 is reduced. However, this technique has a problem in that the degree of the running load fluctuates depending on the state of the magnetic face of the magnetic tape 1.

JP-A-3 116 575 discloses a head device of a magnetic recording and reproducing apparatus, wherein the rotary drum is slightly larger in diameter than the fixed drum. The rotary drum is provided with a tapered part such that the lowermost end of the tapered part and the tape facing surface of the fixed drum are approximately aligned. The length of the tapered part is >1 mm. The purpose of this measure is to lengthen the still endurance time under a still mode.

### SUMMARY OF THE INVENTION

It is an object of the invention to provide a rotary head device which can reduce the running load generated when a rotary drum and a magnetic tape run.

It is another object of the invention to provide a rotary head device which, even when a magnetic tape runs with the tension fluctuating and the load applied to a rotary drum fluctuates in accordance with the frequency of .the tension fluctuation, can reduce the degree of conversion of the load fluctuation into the rotation fluctuation of the rotary drum.

It is a further object of the invention to provide a rotary head device in which the running load is not affected in degree by the state of the magnetic face of a magnetic tape, thereby improving the jitter performance, and the like of a VTR.

The objects are obtained by the features of claim 1.

According to the rotary head device of the invention, since the taper portion is configured so as to have the above-mentioned shape and dimension, the running load of a magnetic tape against the outer face of the rotary drum can be reduced without impairing the running stability of the magnetic tape.

The above and further objects and features of the invention will more fully be apparent from the following detailed description with accompanying drawings.

### BRIEF DESCRIPTION OF THE DRAWINGS

Fig. 1 is a schematic view of a prior art rotary head device;
Fig. 2 is an enlarged view showing a side portion of the prior art rotary head device, and a deformed shape of a magnetic tape;
Fig. 3 is a graph showing the load fluctuation which is caused in the prior art rotary head device by the tension fluctuation of a magnetic tape;
Fig. 4(a) is a schematic view of a rotary head device according to an embodiment of the invention;
Fig. 4(b) is an enlarged view showing the side portion of the rotary head device according to the embodiment of the invention;
Fig. 4(c) is an enlarged view showing a portion of Fig. 4(b);
Fig. 5 is an enlarged view showing a side portion of the rotary head device according to the embodiment of the invention, and a deformed shape of a magnetic tape;
Fig. 6 is a graph showing the relationship between the taper length B and the load current;
Figs. 7(a), 7(b) and 7(c) are graphs showing measurement results of the load current with respect to the taper length B in the invention;
Fig. 8 is a graph showing the relationship between the taper depth C and the load current;
Figs. 9(a), 9(b) and 9(c) are graphs showing measurement results of the load current with respect to the taper depth C in the invention;
Fig. 10 is a graph showing the load fluctuation which is caused in the rotary head device of the invention by the tension fluctuation of a magnetic tape;
Fig. 11(a) is a graph showing the jitter performance of the prior art rotary head device;
Fig. 11(b) is a graph showing the jitter performance of the rotary head device of the invention;
Fig. 12 is an enlarged view showing a side portion of a rotary head device according to another embodiment of the invention; and

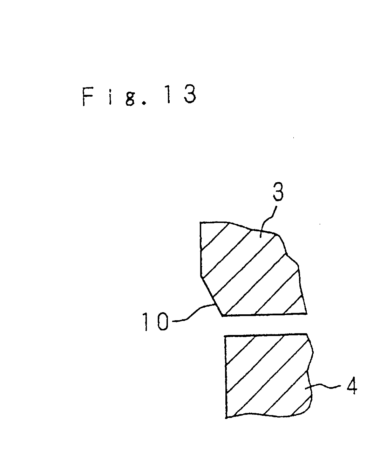

Fig. 13 is an enlarged view showing a side portion of a rotary head device according to a further embodiment of the invention.

### DESCRIPTION OF THE PREFERRED EMBODIMENTS

Hereinafter, the invention will be described with reference to drawings illustrating embodiments thereof.

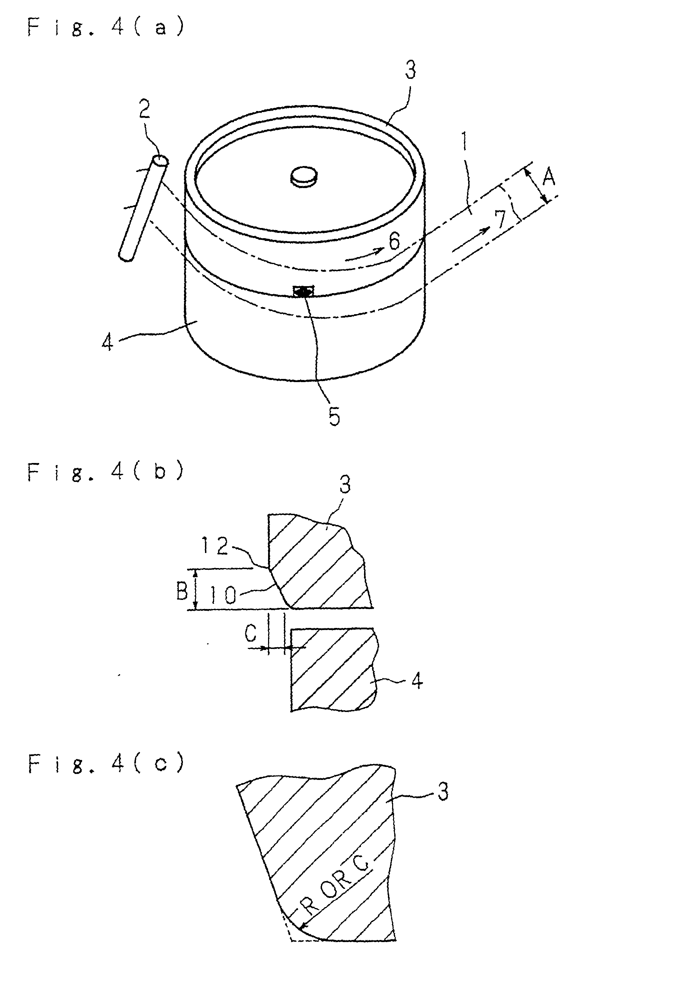

Fig. 4 schematically shows a rotary head device to which the invention is applied, and a taper portion of a rotary drum in an enlarged scale.

In Fig. 4(a), 1 designates a magnetic tape which is guided by a guide post 2 and wound on a rotary drum 3 and stationary drum 4, and 5 designates a magnetic head. The rotary drum 3 and the magnetic tape 1 run in the directions of arrows 6 and 7 shown in the figure. Figs. 4(b) and 4(c) show in an enlarged scale a portion of a side portion of the rotary head device under this state. The reference numeral 10 designates a portion which is located on the end face of the stationary drum 4 side of the rotary drum 3 and in which a taper is formed in accordance with the invention.

In the taper portion 10 shown in Fig. 4(b), the length B is set with respect to the width A of the magnetic tape 1 so as to be within the range of A/30 to A/7, and the change in diameter of the taper portion 10 is set with respect to the taper length B so as to be within the range of B/100 to B/20. The taper has a linear shape or has a section defined by a line, and the end portion of the taper shape is rounded so as to have a radius which is not greater than B. The corner 12 at the start point of the taper shape is constructed in the form of an edge formed by lines intersecting with each other.

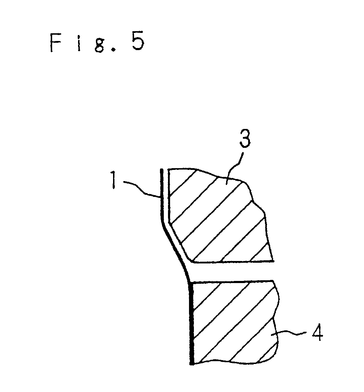

In this way, the taper portion 10 is formed on the end face of the stationary drum 4 side of the rotary drum 3. This causes the outer face of the rotary drum 3 to have a shape which extends along the deformation of the magnetic tape 1 as shown in Fig. 5. Therefore, the running load generated between the magnetic tape 1 and the rotary drum 3 can be reduced, and the pressing load against the rotary drum 3 which corresponds to the tension fluctuation of the magnetic tape 1 can be reduced. This allows the degree of the running load to be less affected by the state of the magnetic face of the magnetic tape 1, thereby improving the jitter performance, and the like of a VTR.

Next, examples of conditions and results of specific measurements which were conducted in the execution of the invention will be described.

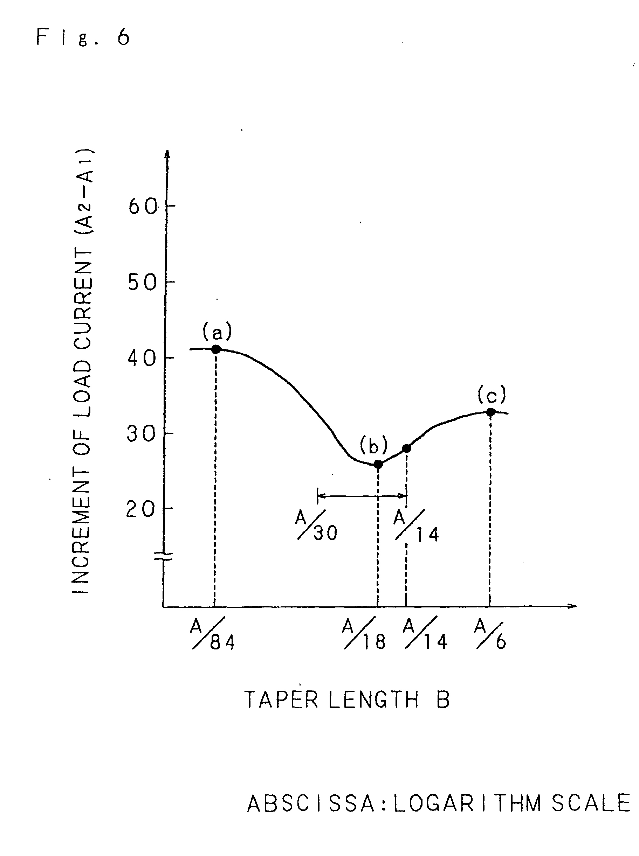

Fig. 6 shows the relationship between the taper length B of the taper portion 10 formed on the rotary drum 3 of the rotary head device of Fig. 4 (that is, the length along the rotation axis direction of the rotary drum 3 and from the start point of the taper portion on the outer face of the rotary drum 3 to the lower end face of the rotary drum 3), and the wrapping load of the magnetic tape 1. When the load current of the rotary drum 3 with a tape running is A2 and the load current of the rotary drum 3 without a tape running is A1, the increment of the load current of the rotary drum 3 which is due to the tape running is (A2 - A1). In the figure, data of the increment of the load current are plotted with respect to various values of the taper length B.

As seen from Fig. 6, the increment of the load current is minimum at a value of the taper length B which is in the vicinity of A/18, and, in the range of values of the taper length B from A/30 to A/7, the increment of the load current is small.

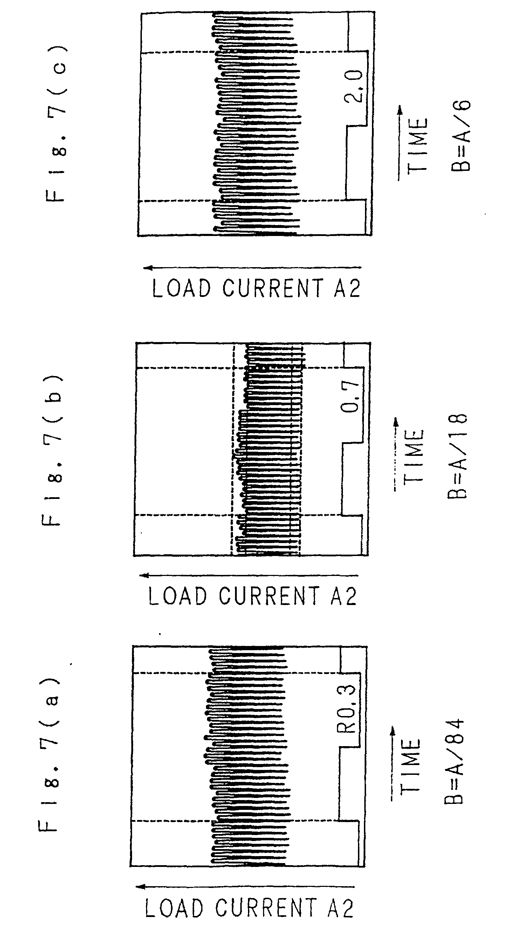

Fig. 7 shows data obtained in the measurements of the load current A2 which were respectively conducted at the measuring points (a), (b) and (c) of Fig. 6. As seen from Fig. 7, when the taper length B is A/84 or A/6, the increment of the load current A2 is larger than that of the case where B is A/18. The reason why data shown in Fig. 6 were obtained is that, generally, the load current A1 of the rotary drum 3 without a tape running is substantially constant.

Fig. 8 shows the relationship between the taper depth C of the taper portion 10 formed on the rotary drum 3 of the rotary head device of Fig. 4 (that is, the length along the radial direction of the rotary drum 3 and from the outer face of the rotary drum 3 to the end point of the taper portion), and the wrapping load of the magnetic tape 1. When the load current of the rotary drum 3 with a tape running is A2 and the load current of the rotary drum 3 without a tape running is A1, the increment of the load current of the rotary drum 3 which is due to the tape running is (A2 - A1). In the figure, data of the increment of the load current are plotted with respect to various values of the taper depth C.

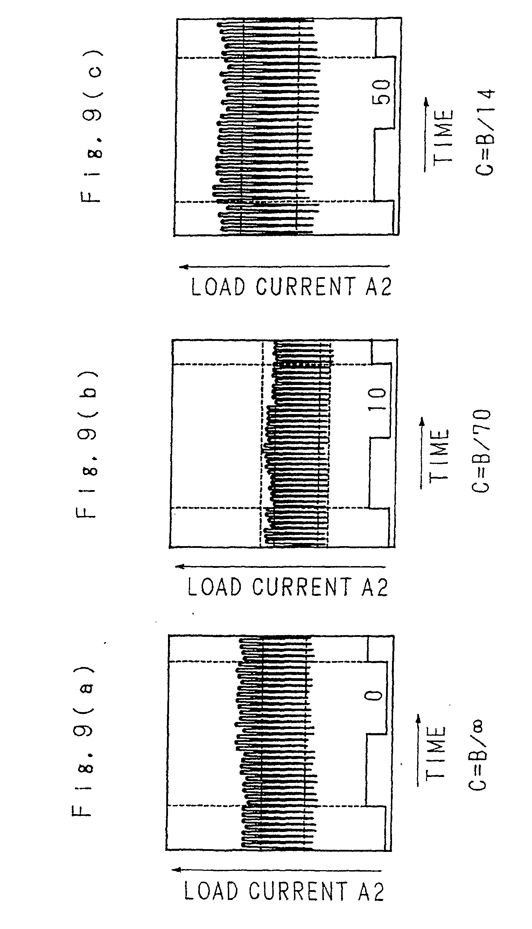

As seen from Fig. 8, the increment of the load current is minimum at a value of the taper depth C which is in the vicinity of B/70, and, in the range of values of the taper depth C from B/100 to B/20, the increment of the load current is small. Fig. 9 shows data obtained in the measurements of the load current A2 which were respectively conducted at the measuring points (a), (b) and (c) of Fig. 8. As seen from Fig. 9, when the taper depth C is B/∞ or B/14, the increment of the load current A2 is larger than that of the case where C is B/70.

As described above, according to the embodiment, the pressure of the magnetic tape 1 against the outer face of the rotary drum 3 can be reduced as shown in Figs. 6 to 9, whereby the running load generated between the magnetic tape 1 and the rotary drum 3 can be reduced.

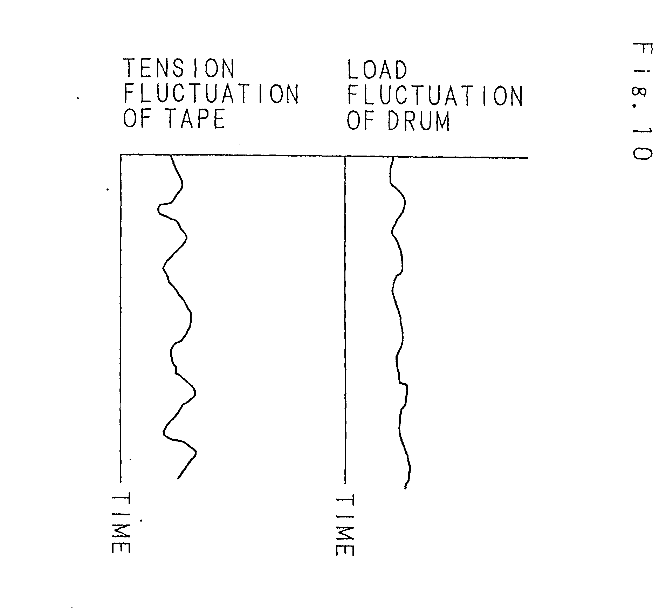

Fig. 10 shows the load fluctuation which is caused in the rotary head device of the invention by the tension fluctuation of a magnetic tape. When comparing Fig. 10 with Fig. 3 showing the load fluctuation in the prior art example, it will be noted that, according to the embodiment, the pressing load against the rotary drum 3 which corresponds to the tension fluctuation of the magnetic tape 1 can be reduced. This allows the degree of the running load to be less affected by the state of the magnetic face of the magnetic tape 1, thereby improving the jitter performance (an index indicating the degree of a transverse swing of a reproduced image which swing is caused by the speed change of the tape and the rotation fluctuation of the rotary drum), and the like of a VTR.

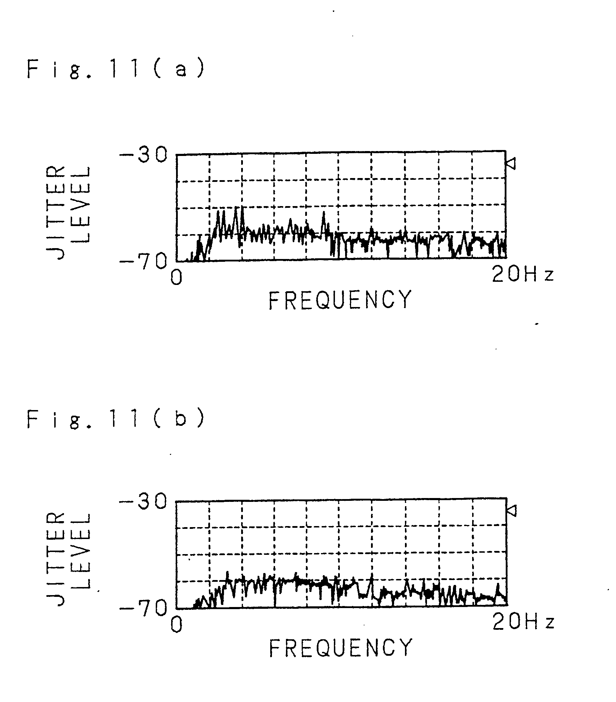

The jitter performances of the prior art rotary drum and the rotary drum of the invention are compared with each other in Figs. 11(a) and 11(b) which respectively show jitter evaluation examples of the prior art rotary drum and the rotary drum of the invention on a frequency axis. The ordinates of Figs. 11(a) and 11(b) represent a jitter level. In the embodiment, peak frequency components caused by tension fluctuation are improved.

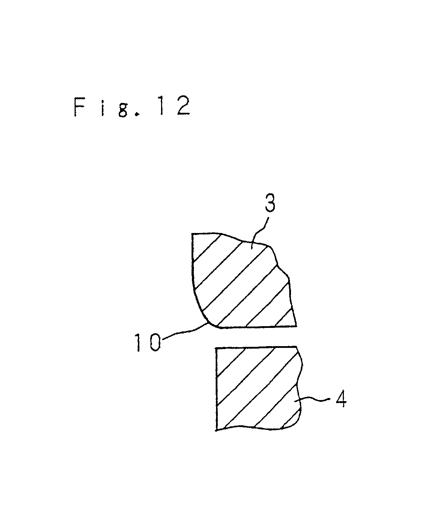

In the embodiment described above, the taper has a linear shape. Alternatively, the taper has a smooth arcuate shape or has a section defined by a smooth arc as shown in Fig. 12. Also in this alternative, the same effects can be attained.

In the above, the embodiment wherein the end portion of the taper shape is rounded. Depending on the degree of the diameter change, the end portion of the taper portion may be formed without being rounded. Also in this case, the same effects can be attained.

In the embodiment described above, the corner at the start point of the taper shape is constructed in the form of an edge. Alternatively, the corner may be rounded or chamfered. Also in this alternative, the same effects can be attained.

As described above, according to the invention, the shape of the end face of the stationary drum side of the rotary drum is set within a specific size range mentioned above, whereby a rotary head device can be obtained in which the pressure of a magnetic tape against the outer face of the rotary drum can be reduced, the running load generated between the rotary drum and the magnetic tape can be reduced, the pressing load against the rotary drum which corresponds to the tension fluctuation of the magnetic tape can be reduced, the degree of the running load is less affected by the state of the magnetic face of the magnetic tape, and the jitter performance, and the like of a VTR can be improved.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. A rotary head device comprising a stationary drum (4), and a rotary drum (3), and for performing recording and/or reproduction while winding a magnetic tape (1) on outer faces of said stationary drum (4) and rotary drum (3),
wherein
a taper portion (10) is formed on the outer face at a lower portion of said rotary drum (3), said taper portion (10) having a substantially conical shape which has a diameter decreasing as progressing toward said stationary drum (4), and, when a width of said magnetic tape (1) is A, a length of said taper portion (10) along a rotation axis direction of said rotary drum (3) and between a start point (12) of said taper portion (10) on the outer face of said rotary drum (3) and the lower end face of said rotary drum is B, and a depth of said taper portion (10) along a radial direction of said rotary drum (3) is C, the condition B/100≤C≤B/47 is given, **characterized in that** the condition A/30≤B≤A/14 is satisfied.

2. A rotary head device according to claim 1, wherein said taper portion (10) has a linear shape.

3. A rotary head device according to claim 1, wherein said taper portion (10) has a smooth arcuate shape.

4. A rotary head device according to claim 1, wherein an end portion of said taper portion (10) is rounded or chamfered to have a radius which is not greater than B, said end portion being in the side of said stationary drum (4).

## Patentansprüche

1. Drehkopfvorrichtung mit einer stationären Trommel (4) und einer Drehtrommel (3) zum Durchführen des Aufzeichnens und/oder des Wiedergebens, während ein Magnetband (1) um äußere Flächen der stationären Trommel (4) und der Drehtrommel (3) gewunden ist, worin
ein abgeschrägter Bereich (10) auf der äußeren Fläche in einem unteren Teil der Drehtrommel (3) ausgebildet ist, welcher abgeschrägte Bereich (10) eine im wesentlichen konische Form hat, dessen Durchmesser mit zunehmender Annäherung an die stationäre Trommel (4) abnimmt, und, wenn eine Breite des Magnetbandes (1) gleich A ist, eine Länge des abgeschrägten Bereichs (10) entlang einer Drehachsenrichtung der Drehtrommel (3) und zwischen einem Anfangspunkt (12) des abgeschrägten Bereichs (10) auf der äußeren Fläche der Drehtrommel (3) und der unteren Endfläche der Drehtrommel gleich B ist und eine Tiefe des abgeschrägten Bereichs (10) entlang einer radialen Richtung der Drehtrommel (3) gleich C ist, die Bedingung B/100≤C≤B/47 gegeben ist, **dadurch gekennzeichnet, dass** der Bedingung A/30≤B≤A/14 genügt ist.

2. Drehkopfvorrichtung nach Anspruch 1, worin der abgeschrägte Bereich (10) eine lineare Form hat.

3. Drehkopfvorrichtung nach Anspruch 1, worin der abgeschrägte Bereich (10) eine glatte Bogenform hat.

4. Drehkopfvorrichtung nach Anspruch 1, worin ein Endbereich des abgeschrägten Bereichs (10) so gerundet oder gefast ist, dass er einen Radius hat, welcher nicht größer als B ist, wobei der Endbereich an der Seite der stationären Trommel (4) ist.

## Revendications

1. Un dispositif à tête rotative comprenant un tambour fixe (4) et un tambour rotatif (3), pour réaliser l'enregistrement et/ou la lecture durant l'enroulement d'une bande magnétique (1) sur des faces extérieures desdits tambour fixe (4) et tambour rotatif (3), dans lequel
une partie en biseau (10) est formé sur la face extérieure et dans une partie inférieure dudit tambour rotatif (3), ladite partie en biseau (10) ayant une forme sensiblement conique dont le diamètre se réduit à mesure qu'elle avance vers ledit tambour fixe (4) et, lorsque la largeur de ladite bande magnétique (1) est A, la longueur de ladite partie en biseau (10) dans la direction de l'axe de rotation dudit tambour rotatif (3) et entre le point de départ (12) de ladite partie en biseau (10) sur la face extérieure dudit tambour rotatif (3) et la face d'extrémité inférieure dudit tambour rotatif est B, et la profondeur de ladite partie en biseau (10) dans la direction radiale dudit tambour rotatif (3) est C, la condition B/100 ≤C ≤B/47 étant donnée, étant **caractérisé en ce que** la condition A/30 ≤B ≤A/14 est satisfaite.

2. Un dispositif à tête rotative selon la revendication 1, dans lequel ladite partie en biseau (10) a un profil linéaire.

3. Un dispositif à tête rotative selon la revendication 1, dans lequel ladite partie en biseau (10) a un profil légèrement arqué.

4. Un dispositif à tête rotative selon la revendication 1, dans lequel une partie d'extrémité de ladite partie en biseau (10) est arrondie ou chanfreinée pour qu'elle ait un rayon inférieur ou égal à B, ladite partie d'extrémité étant du côté dudit tambour fixe (4).
